# EUROPEAN PATENT SPECIFICATION

(11) **EP 4 105 044 B1**
(45) Date of publication and mention of the grant of the patent: **17.07.2024**
(21) Application number: 22175336.1
(22) Date of filing: 25.05.2022
(51) Int. Cl.: B60C 11/12, B60C 11/03

(54) **TIRE**
REIFEN
PNEUMATIQUE

(30) Priority: 15.06.2021 JP 2021099591; 28.02.2022 JP 2022029740
(43) Date of publication of application: 21.12.2022
(73) Proprietor: SUMITOMO RUBBER INDUSTRIES, LTD., Kobe-shi, Hyogo 651-0072 (JP)
(72) Inventor: IKEDA, Ryota, Kobe-shi, Hyogo 651-0072 (JP); KOGA, Hiroaki, Kobe-shi, Hyogo 651-0072 (JP)
(74) Representative: Winter, Brandl - Partnerschaft mbB

(56) References cited:
- JP-A- 2017 094 836
- US-A1- 2018 015 788
- US-A1- 2018 162 171
- US-A1- 2018 170 114
- US-A1- 2020 164 693

## Description

### BACKGROUND OF THE INVENTION

### Field of the Invention

The present invention relates to a tire.

### Background Art

Japanese Laid-Open Patent Publication No. 2019-202679 suggests a tire in which a first middle land portion and a second middle land portion each include middle sipes. The tire is expected to enhance noise performance and steering stability with its middle sipes.

Tires are required to enhance braking performance and steering stability. As one of methods for enhancing braking performance, for example, a method in which a sipe edge of the middle sipe is formed by a chamfered portion can be considered. The chamfered portion can allow a ground contact pressure acting on a ground contact surface of the land portion to be made uniform around the sipe. Such an effect enhances a frictional force, in the tire circumferential direction, exerted by the land portion and contributes to enhancement of braking performance.

However, if the width of the chamfered portion is increased in order to further enhance the above-described effect, an area of the ground contact surface of the land portion is reduced to cause deterioration of responsiveness to steering, and, consequently, steering stability may be reduced.
Document US 2018/015788 A1 discloses a tire according to the preamble of claim 1.

Starting from a tire as disclosed in US 2018/015788 A1 a main object of the present invention is to provide a tire that can enhance braking performance while maintaining steering stability.

### SUMMARY OF THE INVENTION

The present invention is directed to a tire including a tread portion. The tread portion includes four circumferential grooves extending continuously in a tire circumferential direction between two tread ends, and five land portions demarcated by the four circumferential grooves. The four circumferential grooves include a pair of shoulder circumferential grooves, and a pair of crown circumferential grooves disposed between the pair of shoulder circumferential grooves. The land portions include a pair of middle land portions each demarcated between a corresponding one of the shoulder circumferential grooves and a corresponding one of the crown circumferential grooves. Each middle land portion includes a plurality of middle sipes extending completely across the middle land portion in a tire axial direction. Each middle sipe has a chamfered portion at each of sipe edges on both sides. The chamfered portion of each sipe edge of each middle sipe extends from a corresponding one of the crown circumferential grooves to a corresponding one of the shoulder circumferential grooves in a tread planar view. A first chamfered width of the chamfered portion of each sipe edge of each middle sipe at an end on the crown circumferential groove side is greater than a second chamfered width of the chamfered portion at an end on the shoulder circumferential groove side.

In the tire of the present invention, the chamfered portion includes an inner increased-width portion having a chamfered width increased continuously toward a corresponding one of the crown circumferential grooves.

In the tire of the present invention, the chamfered portion includes an outer increased-width portion having a chamfered width increased continuously toward a corresponding one of the shoulder circumferential grooves.

In the tire of the present invention, the chamfered portion includes a constant width portion extending with a constant width between the inner increased-width portion and the outer increased-width portion, and the constant width portion is disposed outwardly of a tire-axially center position of each middle land portion, in the tire axial direction.

In the tire of the present invention, a length, in the tire axial direction, of the inner increased-width portion is greater than a length, in the tire axial direction, of the outer increased-width portion.

In the tire of the present invention, a maximum depth of the inner increased-width portion is greater than a maximum depth of the outer increased-width portion.

In the tire of the present invention, the second chamfered width is 30% to 60% of the first chamfered width.

In the tire of the present invention, the middle sipes disposed in one of the pair of middle land portions and the middle sipes disposed in another of the pair of middle land portions are inclined relative to the tire axial direction in opposite directions.

In the tire of the present invention, the middle sipes disposed in one of the pair of middle land portions and the middle sipes disposed in another of the pair of middle land portions are inclined relative to the tire axial direction in a same direction.

In the tire of the present invention, the tread portion includes an outer tread end located on an outer side of a vehicle when the tire is mounted to the vehicle, by designating a mounting direction to a vehicle. The five land portions include an outer shoulder land portion including the outer tread end. The outer shoulder land portion includes a plurality of outer shoulder lateral grooves and a plurality of outer shoulder sipes that are inclined relative to the tire axial direction in a direction opposite to that of the middle sipes.

In the tire of the present invention, the tread portion includes an inner tread end located on an inner side of a vehicle when the tire is mounted to the vehicle, by designating a mounting direction to a vehicle. The five land portions include an inner shoulder land portion including the inner tread end. The inner shoulder land portion includes a plurality of inner shoulder lateral grooves and a plurality of inner shoulder sipes that are inclined relative to the tire axial direction in a direction opposite to that of the middle sipes.

In the tire of the present invention, a maximum depth of each middle sipe is 50% to 80% of a maximum depth of each shoulder circumferential groove.

In the tire of the present invention, each middle sipe includes a middle tie bar having a locally raised bottom portion.

In the tire of the present invention, a minimum depth from a ground contact surface of a corresponding one of the middle land portions to an outer surface of the middle tie bar is 60% to 90% of a maximum depth of each middle sipe.

In the tire of the present invention, a length, in the tire axial direction, of the middle tie bar is 30% to 50% of a width, in the tire axial direction, of the ground contact surface of each middle land portion.

The tire of the present invention has the above-described structure, and, therefore, braking performance can be enhanced while steering stability is maintained.

### BRIEF DESCRIPTION OF THE DRAWINGS

FIG. 1 is a development of a tread portion according to one embodiment of the present invention;
FIG. 2 is an enlarged view of a pair of middle land portions and a crown land portion in FIG. 1;
FIG. 3 is an enlarged view of a middle sipe in FIG. 2;
FIG. 4 is a cross-sectional view taken along a line A-A in FIG. 2;
FIG. 5 is a cross-sectional view taken along a line B-B in FIG. 2;
FIG. 6 is an enlarged view of an inner shoulder land portion in FIG. 1;
FIG. 7 is an enlarged view of an outer shoulder land portion in FIG. 1;
FIG. 8 is a plan view of a ground contact surface shape of a tire in FIG. 1;
FIG. 9 is a development of a tread portion according to another embodiment of the present invention;
FIG. 10 is a cross-sectional view of a middle sipe according to another embodiment of the present invention as taken along a length direction; and
FIG. 11 is an enlarged view of a pair of middle land portions and a crown land portion of a tire of a comparative example.

### DETAILED DESCRIPTION

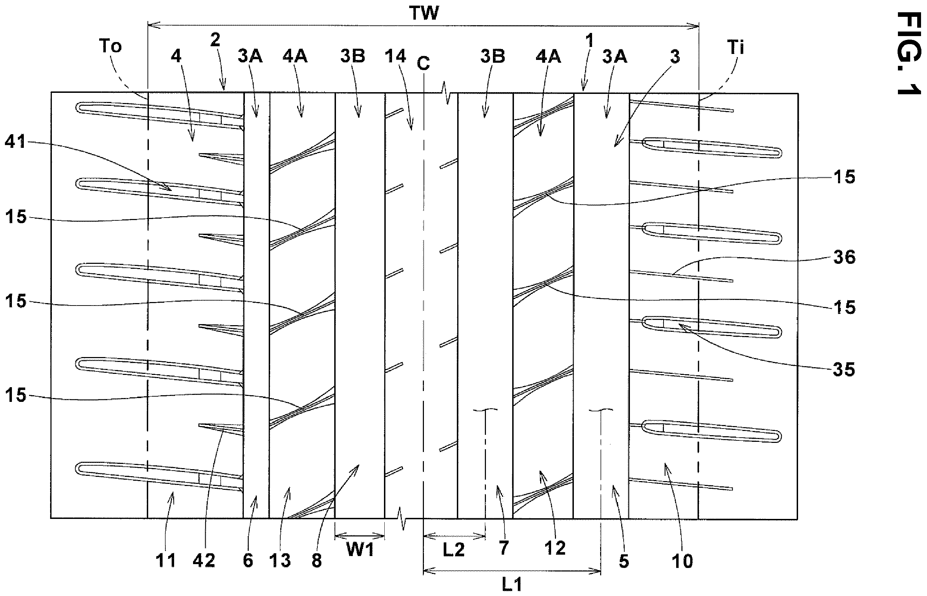

One embodiment of the present invention will be described below with reference to the drawings. FIG. 1 is a development of a tread portion 2 of a tire 1 according to one embodiment of the present invention. The tire 1 of the present embodiment is preferably used as, for example, a pneumatic tire for a passenger car. However, the present invention is not limited thereto, and may be applied to a heavy-duty pneumatic tire or a non-pneumatic tire the inside of which is not filled with pressurized air.

As shown in FIG. 1, in the present invention, the tread portion 2 includes four circumferential grooves 3 that extend continuously in the tire circumferential direction between two tread ends, and five land portions 4 demarcated by the four circumferential grooves 3. That is, the tire 1 of the present invention is configured as a so-called 5-rib tire in which the tread portion 2 includes the five land portions 4.

In the present embodiment, for example, the tread portion 2 has a designated mounting direction to a vehicle. Thus, the two tread ends include an inner tread end Ti located on the inner side of a vehicle when the tire 1 is mounted to the vehicle, and an outer tread end To located on the outer side of the vehicle when the tire 1 is mounted to the vehicle. The mounting direction to a vehicle is indicated, for example, on a sidewall portion (not shown) by characters or a symbol. However, the tire 1 of the present invention is not limited thereto, and a mounting direction to a vehicle may not necessarily be designated.

The inner tread end Ti and the outer tread end To each correspond to the outermost ground contact position in the tire axial direction in a state where a normal load is applied to the tire 1 in a normal state and the tire 1 is in contact with a plane at a camber angle of 0°.

The "normal state" represents a state in which a tire is mounted on a normal rim and is inflated to a normal internal pressure and no load is applied to the tire, in a case where the tire is a pneumatic tire for which various standards are defined. For non-pneumatic tires and tires for which various standards are not defined, the normal state represents a standard use state, corresponding to a purpose of use of the tire, in which the tire is not mounted to a vehicle and no load is applied to the tire. In the description herein, unless otherwise specified, dimensions and the like of components of the tire are represented as values measured in the normal state.

The "normal rim" represents a rim that is defined by a standard, in a standard system including the standard on which the tire is based, for each tire, and is, for example, "standard rim" in the JATMA standard, "Design Rim" in the TRA standard, or "Measuring Rim" in the ETRTO standard.

The "normal internal pressure" represents an air pressure that is defined by a standard, in a standard system including the standard on which the tire is based, for each tire, and is "maximum air pressure" in the JATMA standard, the maximum value recited in the table "TIRE LOAD LIMITS AT VARIOUS COLD INFLATION PRESSURES" in the TRA standard, or "INFLATION PRESSURE" in the ETRTO standard.

The "normal load" represents a load that is defined by a standard, in a standard system including the standard on which the tire is based, for each tire, and is "maximum load capacity" in the JATMA standard, the maximum value recited in the table "TIRE LOAD LIMITS AT VARIOUS COLD INFLATION PRESSURES" in the TRA standard, or "LOAD CAPACITY" in the ETRTO standard, for the pneumatic tires for which various standards are defined. For non-pneumatic tires and tires for which various standards are not defined, the "normal load" represents a load that acts on one tire in a standard mounting state of the tire. The "standard mounting state" represents a state in which a tire is mounted to a standard vehicle corresponding to the purpose of use of the tire and the vehicle is stationary on a flat road surface in a state where the vehicle can run.

The four circumferential grooves 3 include a pair of shoulder circumferential grooves 3A, and a pair of crown circumferential grooves 3B disposed between the pair of shoulder circumferential grooves 3A. In the present embodiment, the shoulder circumferential grooves 3A include, for example, an inner shoulder circumferential groove 5 disposed closest to the inner tread end Ti, and an outer shoulder circumferential groove 6 disposed closest to the outer tread end To. In the present embodiment, the crown circumferential grooves 3B include, for example, an inner crown circumferential groove 7 disposed between the inner shoulder circumferential groove 5 and the tire equator C and an outer crown circumferential groove 8 disposed between the outer shoulder circumferential groove 6 and the tire equator C.

A distance L1 in the tire axial direction from the tire equator C to a groove center line of the shoulder circumferential groove 3A is, for example, preferably 25% to 35% of a tread width TW. A distance L2 in the tire axial direction from the tire equator C to a groove center line of the crown circumferential groove 3B is, for example, preferably 5% to 15% of the tread width TW. The tread width TW represents a distance in the tire axial direction from the inner tread end Ti to the outer tread end To in the normal state.

In the present embodiment, for example, each circumferential groove 3 linearly extends so as to be parallel to the tire circumferential direction. Each circumferential groove 3 may extend, for example, in a wavy manner.

A groove width W1 of each circumferential groove 3 is preferably at least 3 mm. The groove width W1 of each circumferential groove 3 is, for example, preferably 2.0% to 8.0% of the tread width TW. In the present embodiment, the outer shoulder circumferential groove 6 has the smallest groove width among the four circumferential grooves 3. However, the present invention is not limited thereto. A depth of each circumferential groove 3 is, for example, preferably 5 to 10 mm in a case where the tire 1 is a pneumatic tire for a passenger car.

In the present invention, the land portions 4 include a pair of middle land portions 4A each demarcated between the shoulder circumferential groove 3A and the crown circumferential groove 3B. In the present embodiment, the pair of middle land portions 4A include, for example, an inner middle land portion 12 and an outer middle land portion 13. The inner middle land portion 12 is, for example, demarcated between the inner shoulder circumferential groove 5 and the inner crown circumferential groove 7. The outer middle land portion 13 is, for example, demarcated between the outer shoulder circumferential groove 6 and the outer crown circumferential groove 8.

In the present embodiment, the land portions 4 also include a crown land portion 14, an inner shoulder land portion 10, and an outer shoulder land portion 11. The crown land portion 14 is demarcated between the inner crown circumferential groove 7 and the outer crown circumferential groove 8. The inner shoulder land portion 10 is demarcated so as to be disposed outwardly of the inner shoulder circumferential groove 5 in the tire axial direction, and includes the inner tread end Ti. The outer shoulder land portion 11 is demarcated so as to be disposed outwardly of the outer shoulder circumferential groove 6 in the tire axial direction, and includes the outer tread end To.

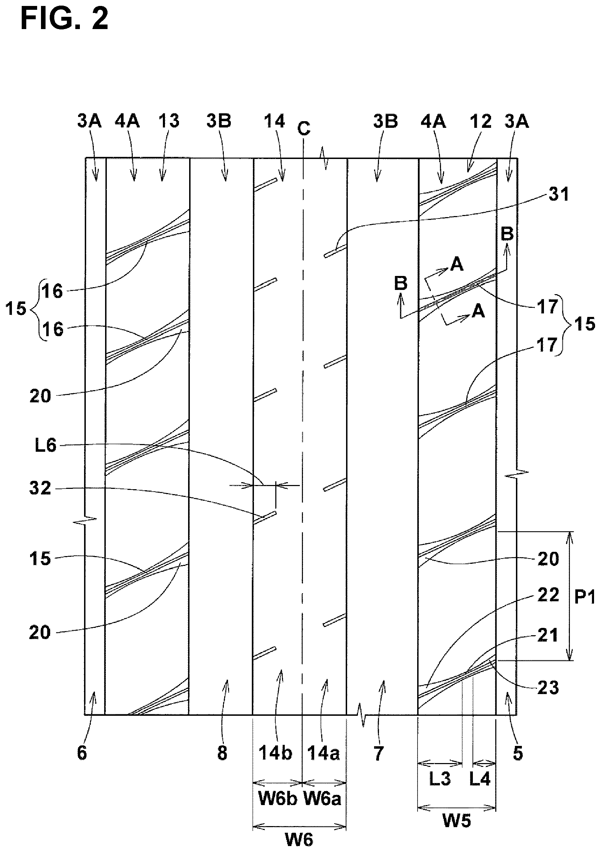

FIG. 2 is an enlarged view of the pair of middle land portions 4A and the crown land portion 14. As shown in FIG. 2, each of the middle land portions 4A has a plurality of middle sipes 15 extending completely across the middle land portion 4A in the tire axial direction.

In the description herein, the "sipe" represents a cut element having a small width such that, in a sipe body portion in which a pair of sipe walls are disposed substantially parallel to each other, a width between the two sipe walls is not greater than 1.5 mm. The width is preferably 0.5 to 1.5 mm. A chamfered portion having a width of greater than 1.5 mm may be connected to the opening of the sipe. A flask bottom having a width of greater than 1.5 mm may be connected to the bottom of the sipe.

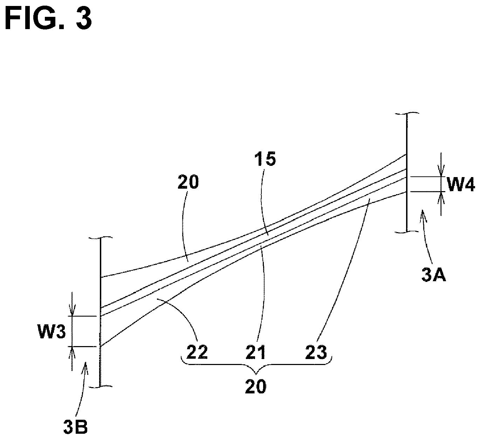

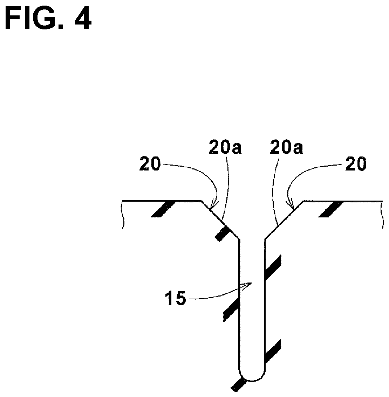

FIG. 3 is an enlarged view of the middle sipe 15. FIG. 4 is a cross-sectional view taken along a line A-A in FIG. 2. As shown in FIG. 3 and FIG. 4, the middle sipe 15 has a chamfered portion 20 at at least one of sipe edges on both sides. In the present embodiment, the chamfered portion 20 is, for example, formed by an inclined surface 20a extending between the ground contact surface of the land portion and a sipe wall. The inclined surface 20a is, for example, disposed at an angle of 30 to 60° relative to the line, normal to the tire, passing through the ground contact surface of the land portion. A depth of the chamfered portion 20 is, for example, 0.5 to 3.0 mm.

As shown in FIG. 3, the chamfered portion 20 extends from the crown circumferential groove 3B to the shoulder circumferential groove 3A in a tread planar view. A first chamfered width W3 of the chamfered portion 20 at the end on the crown circumferential groove 3B side is greater than a second chamfered width W4 of the chamfered portion 20 at the end on the shoulder circumferential groove 3A side. In the present invention, by adopting the above-described structure, braking performance can be enhanced while steering stability is maintained. As the reason, the following mechanism is inferred.

As shown in FIG. 2, in the middle land portions 4A of the present invention, strain in the ground contact surface is reduced by the middle sipes 15 having the chamfered portions 20, and, consequently, a ground contact pressure acting on the ground contact surface is made uniform. Thus, braking performance and steering stability are enhanced.

Furthermore, in the land portion disposed between the tire equator and the tread end as in the middle land portion 4A of the present invention, a higher ground contact pressure tends to act on the ground contact surface on the tire equator side. In consideration of such a tendency, in the present invention, the first chamfered width W3 (shown in FIG. 3) of the chamfered portion 20 at the end on the crown circumferential groove 3B side is greater than the second chamfered width W4 (shown in FIG. 3) of the chamfered portion 20 at the end on the shoulder circumferential groove 3A side. Thus, the chamfered width can be sufficiently assured on the tire equator side at which a ground contact pressure is relatively high, and excellent braking performance is exhibited. Meanwhile, the chamfered width is small on the tread end side at which a ground contact pressure is relatively low, and an area of the ground contact surface can be assuredly increased, so that steering stability can be effectively maintained. The tire of the present invention is assumed to enhance braking performance while maintaining steering stability through the above-described mechanism.

The configurations of the present embodiment will be described below in more detail. The configurations described below represent a specific mode of the present embodiment. Therefore, it is needless to say that the present invention can provide the above-described effect even when the configurations described below are not provided. In addition, even when any one of the configurations described below is independently applied to the tire according to the present invention having the above-described characteristics, performance improvement corresponding to each configuration can be expected. Furthermore, when some of the configurations described below are applied in combination, complex performance improvement corresponding to the configurations can be expected.

As shown in FIG. 2, the middle sipes 15 disposed in one of the paired middle land portions 4A and the middle sipes 15 disposed in the other of the paired middle land portions 4A are inclined relative to the tire axial direction in the same direction. Specifically, the middle sipes 15 include outer middle sipes 16 disposed in the outer middle land portion 13 and inner middle sipes 17 disposed in the inner middle land portion 12. The outer middle sipe 16 is, for example, inclined in the right-upward direction relative to the tire axial direction. Hereinafter, this inclination direction may be expressed by "inclined in a first direction relative to the tire axial direction". The inner middle sipe 17 is, for example, inclined relative to the tire axial direction in the same direction as the outer middle sipe 16. However, the present invention is not limited thereto. Unless otherwise specified, the characteristics of the middle sipe 15 described herein can be applied to both the outer middle sipes 16 and the inner middle sipes 17.

The middle sipe 15 is, for example, inclined at 20 to 30° relative to the tire axial direction. The middle sipe 15 having such a structure can allow a frictional force to be exerted also in the tire axial direction during running on a wet surface, and contributes to enhancement of steering stability.

One pitch length P1 in the tire circumferential direction for the plurality of the middle sipes 15 is, for example, preferably greater than a width W5, in the tire axial direction, of a ground contact surface of the middle land portion 4A. Specifically, the one pitch length P1 for the middle sipes 15 is 130% to 180% of the width W5 of the middle land portion 4A. Such an arrangement of the middle sipes 15 enhances steering stability and wet performance in a well-balanced manner. The one pitch length represents a distance in the tire circumferential direction between sipe center lines (line by which the sipe width is equally divided into two) of two sipes adjacent to each other in the tire circumferential direction.

As shown in FIG. 3, the middle sipe 15 has the chamfered portion 20 at each of sipe edges on both sides. Thus, the above-described effect is more assuredly exhibited. It is needless to say that the structure of one chamfered portion 20 described herein can be applied to each of the two chamfered portions 20 disposed in one sipe.

The second chamfered width W4 is 30% to 60% of the first chamfered width W3. Thus, steering stability and braking performance are enhanced in a well-balanced manner.

Specifically, the first chamfered width W3 is preferably 1.5 to 3.0 mm. The second chamfered width W4 is preferably 0.5 to 1.5 mm. The minimum chamfered width of the chamfered portion 20 of the middle sipe 15 is, for example, preferably 0.3 to 1.0 mm. Thus, the above-described effect is exhibited while uneven wear of the land portion is reduced.

The chamfered portion 20 includes, for example, a constant width portion 21, an inner increased-width portion 22, and an outer increased-width portion 23. The constant width portion 21 extends with a constant chamfered width in the sipe length direction. The inner increased-width portion 22 is, for example, continuous with the crown circumferential groove 3B side of the constant width portion 21, and has a chamfered width increased continuously from the constant width portion 21 to the crown circumferential groove 3B.

The outer increased-width portion 23 is, for example, continuous with the shoulder circumferential groove 3A side of the constant width portion 21, and has a chamfered width increased continuously from the constant width portion 21 to the shoulder circumferential groove 3A.

As described above, in the present embodiment, the middle sipe 15 has the chamfered portion 20 at each of sipe edges on both sides, and the chamfered portion 20 includes the inner increased-width portion 22 and the outer increased-width portion 23. In the present embodiment, even when a ground contact pressure is greatly changed, each of the middle land portions 4A can allow exhibition of excellent ground contact performance through a combination of such configurations, resulting in further enhancement of steering stability and braking performance.

As shown in FIG. 2, the constant width portion 21 is, for example, disposed outwardly of the tire-axially center position of the middle land portion 4A, in the tire axial direction. Thus, a length L3, in the tire axial direction, of the inner increased-width portion 22 is greater than a length L4, in the tire axial direction, of the outer increased-width portion 23. Specifically, the length L3 of the inner increased-width portion 22 is 40% to 60% of the width W5 of the ground contact surface of the middle land portions 4A. The length L4 of the outer increased-width portion 23 is 25% to 35% of the width W5 of the ground contact surface of the middle land portion 4A. Thus, even when a ground contact pressure acting on the middle land portion 4A is changed, the above-described effect is assuredly exhibited.

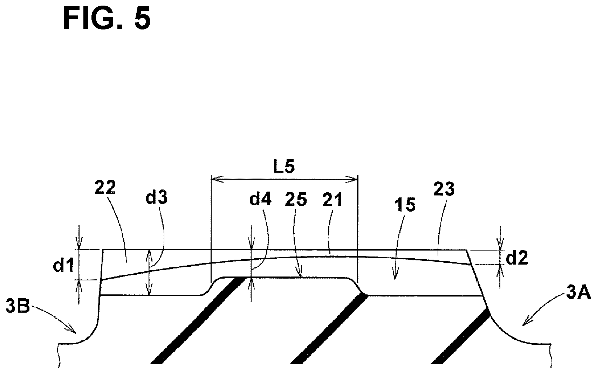

FIG. 5 is a cross-sectional view taken along a line B-B in FIG. 2. As shown in FIG. 5, the maximum depth d1 of the inner increased-width portion 22 is greater than the maximum depth d2 of the outer increased-width portion 23. Specifically, the depth d2 of the outer increased-width portion 23 is 20% to 60% of the depth d1 of the inner increased-width portion 22. The depth d1 of the inner increased-width portion 22 and the maximum depth d2 of the outer increased-width portion 23 are, for example, each 0.5 to 3.0 mm. The minimum depth of the chamfered portion 20 is, for example, 0.3 to 1.0 mm.

The middle sipe 15 includes, for example, a middle tie bar 25 having a locally raised bottom portion. The middle tie bar 25 is, for example, disposed in the center of three regions in a case where the middle sipe 15 is equally divided into the three regions in the tire axial direction. A length L5, in the tire axial direction, of the middle tie bar 25 is 30% to 50% of the width W5 (shown in FIG. 2), in the tire axial direction, of the ground contact surface of the middle land portion 4A. The minimum depth d4 from the ground contact surface of the middle land portion 4A to the outer surface of the middle tie bar 25 is, for example, 60% to 90% of the maximum depth d3 of the middle sipe 15, and preferably 50% to 70% thereof. The maximum depth d3 of the middle sipe 15 is, for example, 50% to 80% of the maximum depth of the shoulder circumferential groove 3A. The middle tie bar 25 having such a structure allows stiffness of the middle land portion 4A to be maintained and contributes to exerting a high cornering force.

As shown in FIG. 2, the center position, in the tire axial direction, of the crown land portion 14 is displaced from the tire equator C toward the outer tread end To (shown in FIG. 1). Thus, in the crown land portion 14, a width W6b of a ground contact surface of an outer region 14b located between the outer tread end To and the tire equator C is greater than a width W6a of a ground contact surface of an inner region 14a located between the inner tread end Ti and the tire equator C. Specifically, the width W6b of the outer region 14b is 51% to 55% of a width W6 of a ground contact surface of the crown land portion 14. The crown land portion 14 having such a structure allows change of a cornering force according to change of a steering angle to become linear, and contributes to enhancement of steering stability and ride comfort.

The crown land portion 14 includes a plurality of first crown sipes 31 and a plurality of second crown sipes 32. For example, the first crown sipe 31 extends from the inner crown circumferential groove 7 and terminates in the crown land portion 14. For example, the second crown sipe 32 extends from the outer crown circumferential groove 8 and terminates in the crown land portion 14. The first crown sipe 31 and the second crown sipe 32 having such structures can reduce rolling resistance while maintaining wet performance.

In order to assuredly exhibit the above-described effect, each of the first crown sipe 31 and the second crown sipe 32 does not extend across the center position, in the tire axial direction, of the crown land portion 14, and does not extend across the tire equator C. A length L6, in the tire axial direction, of the first crown sipe 31 or the second crown sipe 32 is, for example, 15% to 30% of the width W6, in the tire axial direction, of the ground contact surface of the crown land portion 14.

The first crown sipe 31 and the second crown sipe 32 are, for example, inclined in the first direction relative to the tire axial direction. An angle of the first crown sipe 31 or the second crown sipe 32 relative to the tire axial direction is, for example, 20 to 30°. In a more preferable mode, an angular difference between the outer middle sipe 16 and the first crown sipe 31 or the second crown sipe 32 is not greater than 10°. Thus, uneven wear of the crown land portion 14 is reduced.

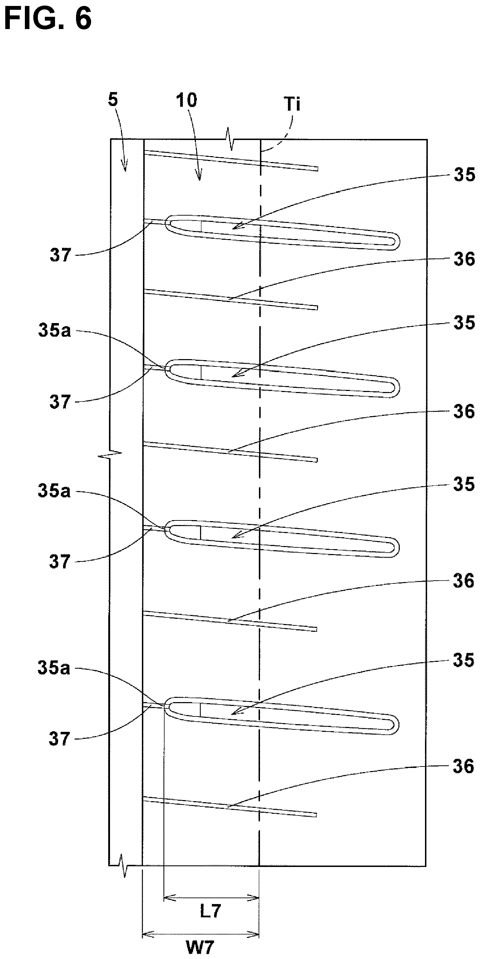

FIG. 6 is an enlarged view of the inner shoulder land portion 10. As shown in FIG. 6, the inner shoulder land portion 10 includes a plurality of inner shoulder lateral grooves 35 and a plurality of inner shoulder sipes 36. In the present embodiment, the inner shoulder lateral grooves 35 and the inner shoulder sipes 36 alternate in the tire circumferential direction.

The inner shoulder lateral groove 35 extends from an inner end 35a disposed between the inner tread end Ti and the inner shoulder circumferential groove 5 beyond the inner tread end Ti. For example, the inner shoulder lateral groove 35 extends across the center position, in the tire axial direction, of a ground contact surface of the inner shoulder land portion 10. A length L7, in the tire axial direction, of the inner shoulder lateral groove 35 at the ground contact surface of the inner shoulder land portion 10 is, for example, 70% to 90% of a width W7, in the tire axial direction, of the ground contact surface of the inner shoulder land portion 10. The inner shoulder lateral groove 35 having such a structure contributes to enhancing braking performance while maintaining wet performance.

The inner shoulder lateral groove 35 is, for example, inclined in the right-downward direction relative to the tire axial direction. That is, in the present embodiment, the inner shoulder lateral groove 35 is inclined relative to the tire axial direction in the direction opposite to that of the middle sipe 15. Hereinafter, this inclination direction may be expressed by "inclined in a second direction relative to the tire axial direction". An angle of the inner shoulder lateral groove 35 relative to the tire axial direction is, for example, 5 to 15°. The inner shoulder lateral groove 35 having such a structure can guide water thereinside toward the inner tread end Ti during running on a wet surface, and exhibits excellent drainage performance.

The inner shoulder sipe 36 extends from the inner shoulder circumferential groove 5 beyond the inner tread end Ti. For example, the inner shoulder sipe 36 linearly extends so as to be inclined in the second direction relative to the tire axial direction. An angle of the inner shoulder sipe 36 relative to the tire axial direction is, for example, 5 to 15°. An angular difference between the inner shoulder sipe 36 and the inner shoulder lateral groove 35 is preferably not greater than 10°, and, in the present embodiment, the inner shoulder sipe 36 and the inner shoulder lateral groove 35 extend in parallel to each other. The inner shoulder sipe 36 having such a structure can enhance noise performance and ride comfort while reducing uneven wear of the inner shoulder land portion 10.

The inner shoulder sipe 36 preferably includes no chamfered portion. That is, the inner shoulder sipe 36 has a sipe wall that is connected directly to the ground contact surface of the inner shoulder land portion 10, and that extends along the tire radial direction. The inner shoulder sipe 36 having such a structure can exert, with its edges, a high frictional force during running on a wet surface.

In the present embodiment, the inner shoulder land portion 10 has an auxiliary sipe 37 that extends from the inner shoulder circumferential groove 5 to the inner end 35a of the inner shoulder lateral groove 35. The auxiliary sipe 37 having such a structure contributes to maintaining wet performance.

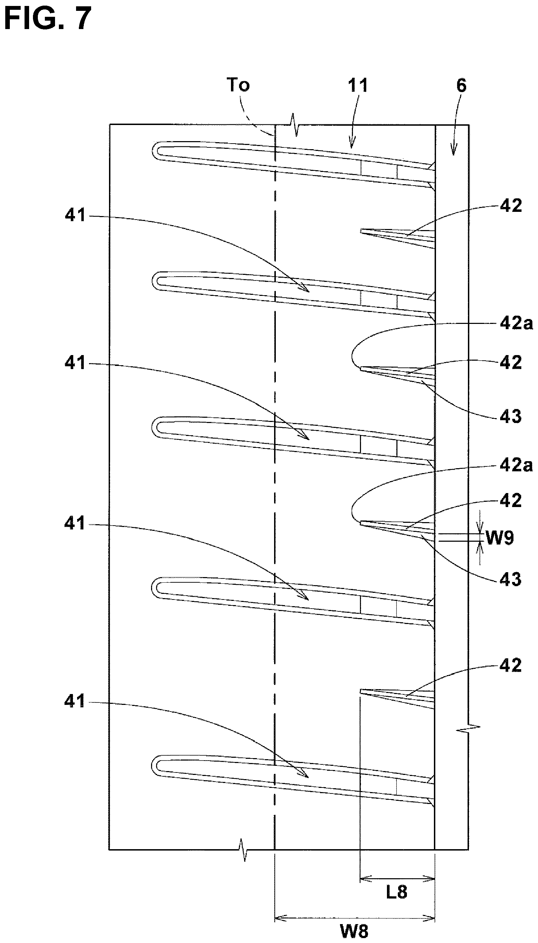

FIG. 7 is an enlarged view of the outer shoulder land portion 11. As shown in FIG. 7, the outer shoulder land portion 11 includes a plurality of outer shoulder lateral grooves 41 and a plurality of outer shoulder sipes 42. In the present embodiment, the outer shoulder lateral grooves 41 and the outer shoulder sipes 42 alternate in the tire circumferential direction.

The outer shoulder lateral groove 41 extends from the outer shoulder circumferential groove 6 beyond the outer tread end To. The outer shoulder lateral groove 41 is, for example, inclined in the second direction relative to the tire axial direction. That is, in the present embodiment, the outer shoulder lateral groove 41 is inclined relative to the tire axial direction in the direction opposite to that of the middle sipe 15. An angle of the outer shoulder lateral groove 41 relative to the tire axial direction is, for example, 5 to 15°. In a preferable mode, an angular difference between the outer shoulder lateral groove 41 and the inner shoulder lateral groove 35 (shown in FIG. 6) is not greater than 10°, and more preferably not greater than 5°.

The outer shoulder sipe 42 extends from the outer shoulder circumferential groove 6 and has a terminating end 42a between the outer shoulder circumferential groove 6 and the outer tread end To. A length L8, in the tire axial direction, of the outer shoulder sipe 42 is 40% to 60% of a width W8, in the tire axial direction, of a ground contact surface of the outer shoulder land portion 11.

The outer shoulder sipe 42 is, for example, inclined in the second direction relative to the tire axial direction. An angle of the outer shoulder sipe 42 relative to the tire axial direction is, for example, 5 to 15°. An angular difference between the outer shoulder sipe 42 and the outer shoulder lateral groove 41 is preferably not greater than 10°, and, in the present embodiment, the outer shoulder sipe 42 and the outer shoulder lateral groove 41 extend in parallel to each other. The outer shoulder sipe 42 having such a structure can maintain wet performance while reducing uneven wear of the outer shoulder land portion 11.

In the present embodiment, the outer shoulder sipe 42 has a chamfered portion 43 at each of sipe edges on both sides. In a more preferable mode, the chamfered portion 43 has a chamfered width increased from the terminating end 42a side toward the outer shoulder circumferential groove 6. Thus, a ground contact pressure acting on the outer shoulder land portion 11 is made uniform, and steering stability and braking performance are enhanced.

For example, a chamfered width of the chamfered portion 43 of the outer shoulder sipe 42 is continuously increased from the terminating end 42a side toward the outer shoulder circumferential groove 6. The maximum chamfered width W9 of the chamfered portion 43 is, for example, 2.0 to 4.0 mm. In the present embodiment, the maximum chamfered width W9 is formed at the end of the outer shoulder sipe 42 on the outer shoulder circumferential groove 6 side.

In a more preferable mode, the maximum chamfered width W9 of the outer shoulder sipe 42 is less than the first chamfered width W3 (shown in FIG. 3) of the chamfered portion 20 of the middle sipe 15, and greater than the second chamfered width W4 (shown in FIG. 3). Thus, uneven wear of each portion is reduced.

In the present embodiment, each land portion does not include grooves and sipes other than the above-described grooves and sipes. Thus, the various performances described above are exhibited in a well-balanced manner. However, the present invention is not limited thereto.

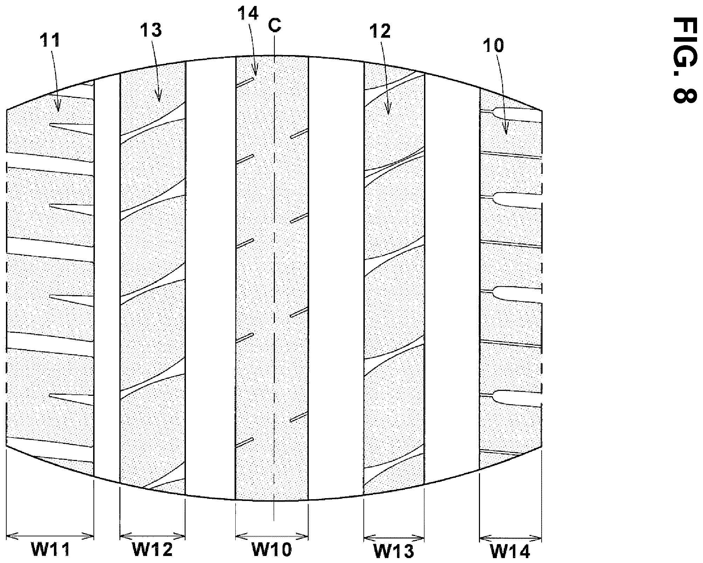

FIG. 8 shows a ground contact surface shape obtained when 50% of the normal load (hereinafter, may be referred to as "50% load state") is applied to the tire 1 in the normal state. As shown in FIG. 8, in the 50% load state, a width W11, in the tire axial direction, of the ground contact surface of the outer shoulder land portion 11 is preferably 114% to 124% of a width W10, in the tire axial direction, of the ground contact surface of the crown land portion 14.

Similarly, a width W12, in the tire axial direction, of a ground contact surface of the outer middle land portion 13 is preferably 85% to 115% of the width W10, in the tire axial direction, of the ground contact surface of the crown land portion 14. The width W12, in the tire axial direction, of the ground contact surface of the outer middle land portion 13 is preferably greater than a width W 13, in the tire axial direction, of a ground contact surface of the inner middle land portion 12. Specifically, the width W12 of the outer middle land portion 13 is preferably 105% to 115% of the width W13 of the inner middle land portion 12. Each of the width W13, in the tire axial direction, of the ground contact surface of the inner middle land portion 12 and a width W14, in the tire axial direction, of the ground contact surface of the inner shoulder land portion 10 is preferably 80% to 100% of the width W10, in the tire axial direction, of the ground contact surface of the crown land portion 14. Thus, in a case where the tires 1 of the present embodiment are applied to all wheels of a vehicle, the front wheels and the rear wheels can exhibit cornering forces in a well-balanced manner, and excellent steering stability is consequently exhibited.

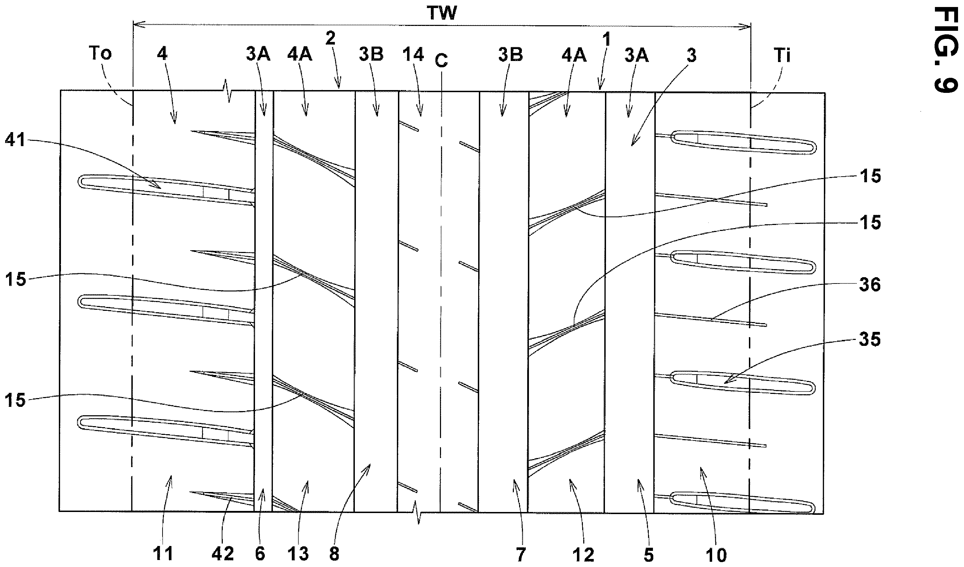

FIG. 9 is a development of a tread portion 2 according to another embodiment of the present invention. As shown in FIG. 9, the present embodiment is different from the embodiment shown in FIG. 1 in that, in the present embodiment, the outer middle sipes 16, and the first crown sipes 31 and the second crown sipes 32 are inclined in the second direction relative to the tire axial direction. Thus, the middle sipes 15 disposed in one of the paired middle land portions 4A and the middle sipes 15 disposed in the other of the paired middle land portions 4A are inclined relative to the tire axial direction in the opposite directions. Such an embodiment contributes to enhancement of conicity of the tire. To the embodiment in FIG. 9, the structure described for the embodiment shown in FIG. 1 to FIG. 8 can be applied.

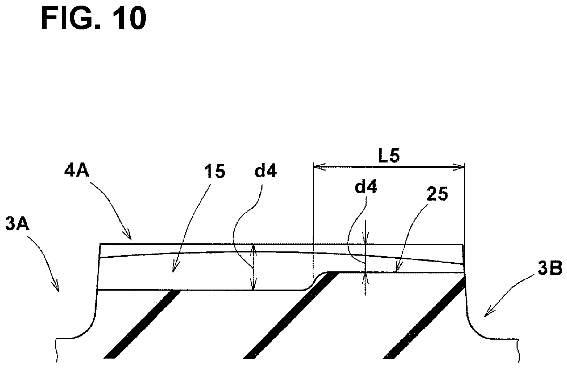

FIG. 10 is a cross-sectional view of the middle sipe 15 according to another embodiment of the present invention as taken along the length direction. As shown in FIG. 10, in the present embodiment, the middle sipe 15 includes a middle tie bar 25 having a locally raised bottom portion. In the present embodiment, the middle tie bar 25 is, for example, disposed between the crown circumferential groove 3B and the center position, in the tire axial direction, of the ground contact surface of the middle land portion 4A. Specifically, the middle tie bar 25 has the raised portion including the end portion, in the tire axial direction, of the middle sipe 15. The middle tie bar 25 having such a structure enhances stiffness of the middle land portion 4A on the crown circumferential groove 3B side and contributes to exhibiting excellent steering stability.

In still another embodiment, the middle tie bar 25 may be, for example, disposed between the shoulder circumferential groove 3A and the center position, in the tire axial direction, of the ground contact surface of the middle land portions 4A (not shown). In such an embodiment, stiffness of the middle land portion 4A on the shoulder circumferential groove 3A side is enhanced, and, consequently, responsiveness to steering during cornering becomes linear.

A length L5, in the tire axial direction, of the middle tie bar 25 is 30% to 50% of the width W5 (shown in FIG. 2), in the tire axial direction, of the ground contact surface of the middle land portions 4A. In a case where the length, in the tire axial direction, of the middle tie bar 25 varies in the tire radial direction, the length L5 is measured at the center position in the tire radial direction. The minimum depth d4 from the ground contact surface of the middle land portion 4A to the outer surface of the middle tie bar 25 is, for example, 60% to 90% of the maximum depth d3 of the middle sipe 15, and preferably 50% to 70% thereof. The maximum depth d3 of the middle sipe 15 is, for example, 50% to 80% of the maximum depth of the shoulder circumferential groove 3A. The middle tie bar 25 having such a structure contributes to well-balanced enhancement of steering stability and wet performance.

Although the tire according to the embodiments of the present invention has been described above in detail, the present invention is not limited to the above-described specific embodiments, and various modifications can be made to implement the present invention.

### Examples

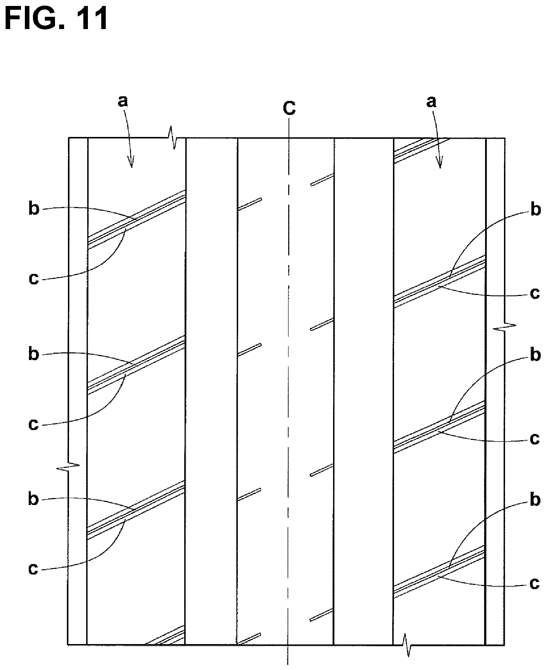

Test tires having the basic pattern shown in FIG. 1 and a size of 235/45R19 were produced based on the specifications in Table 1. As a comparative example, a test tire having a pair of middle land portions a shown in FIG. 11 was produced. In the tire of the comparative example, each middle land portion a included middle sipes b each having a chamfered portion c extending with a constant chamfered width. The tire of the comparative example was substantially the same as the tire shown in FIG. 1 except for the above-described structure. For each test tire, steering stability and braking performance were tested. Specifications common to the test tires and test methods were as follows.
Rim on which the tire was mounted: 19×8.0J
Tire internal pressure: 230 kPa
Test vehicle: four-wheel-drive vehicle having an engine displacement of 2000 cc
Positions at which the tires were mounted: all wheels

### <Steering stability>

A driver made sensory evaluation for steering stability when the test vehicle was caused to run on a dry road surface. The result is indicated as a score with the steering stability of the comparative example being 100. The greater the value is, the more excellent steering stability is.

### <Braking performance>

A driver made sensory evaluation for braking performance in various states when the test vehicle was caused to run on a dry road surface. The result is indicated as a score with the braking performance of the comparative example being 100. The greater the value is, the more excellent the braking performance is.

The test results are indicated in Table 1.

**[Table 1]**

| | Comparative example | Example 1 | Example 2 | Example 3 | Example 4 | Example 5 | Example 6 | Example 7 | Example 8 | Example 9 |
|---|---|---|---|---|---|---|---|---|---|---|
| Figure showing middle land portion | FIG. 11 | FIG. 2 | FIG. 2 | FIG. 2 | FIG. 2 | FIG. 2 | FIG. 2 | FIG. 2 | FIG. 2 | FIG. 2 |
| Second chamfered width W4/first chamfered width W3 (%) | - | 45 | 30 | 40 | 50 | 60 | 40 | 40 | 40 | 40 |
| Depth d2 of outer increased-width portion/depth d1 of inner increased-width portion (%) | - | 40 | 40 | 40 | 40 | 40 | 20 | 30 | 50 | 60 |
| Steering stability (score) | 100 | 103 | 104 | 103 | 102 | 101 | 104 | 103 | 103 | 102 |
| Braking performance (score) | 100 | 108 | 104 | 106 | 108 | 108 | 106 | 107 | 108 | 108 |

Table 1 indicates that the steering stability indicated 101 to 104 points and the steering stability was thus maintained while the braking performance indicated 104 to 108 points and was thus enhanced in the tires of the examples. That is, the tire of the present invention was confirmed to enhance braking performance while maintaining steering stability.

## Claims

1. A tire (1) comprising
a tread portion (2),
wherein the tread portion (2) comprises four circumferential grooves (3) extending continuously in a tire circumferential direction between two tread ends (Ti, To), and five land portions (4) demarcated by the four circumferential grooves (3),
wherein the four circumferential grooves (3) comprise a pair of shoulder circumferential grooves (3A), and a pair of crown circumferential grooves (3B) disposed between the pair of shoulder circumferential grooves (3A),
wherein the land portions (4) comprise a pair of middle land portions (4A) each demarcated between a corresponding one of the shoulder circumferential grooves (3A) and a corresponding one of the crown circumferential grooves (3B),
wherein each middle land portion (4A) comprises a plurality of middle sipes (15) extending completely across the middle land portion (4A) in a tire axial direction,
wherein each middle sipe (15) has a chamfered portion (20) at each of sipe edges on both sides, and
wherein the chamfered portion (20) of each sipe edge of each middle sipe (15) extends from a corresponding one of the crown circumferential grooves (3B) to a corresponding one of the shoulder circumferential grooves (3A) in a tread planar view, **characterized in that**
a first chamfered width (W3) of the chamfered portion (20) of each sipe edge of each middle sipe (15) at an end on the crown circumferential groove (3B) side is greater than a second chamfered width (W4) of the chamfered portion (20) at an end on the shoulder circumferential groove (3A) side.

2. The tire (1) according to claim 1, wherein the chamfered portion (20) comprises an inner increased-width portion (22) having a chamfered width increased continuously toward a corresponding one of the crown circumferential grooves (3B).

3. The tire (1) according to claim 2, wherein the chamfered portion (20) comprises an outer increased-width portion (23) having a chamfered width increased continuously toward a corresponding one of the shoulder circumferential grooves (3A).

4. The tire (1) according to claim 3,
wherein the chamfered portion (20) comprises a constant width portion (21) extending with a constant width between the inner increased-width portion (22) and the outer increased-width portion (23), and
wherein the constant width portion (21) is disposed outwardly of a tire-axially center position of each middle land portion (4A), in the tire axial direction.

5. The tire (1) according to claim 3 or 4, wherein a length (L3), in the tire axial direction, of the inner increased-width portion (22) is greater than a length (L4), in the tire axial direction, of the outer increased-width portion (23).

6. The tire (1) according to any one of claims 3 to 5, wherein a maximum depth (d1) of the inner increased-width portion (22) is greater than a maximum depth (d2) of the outer increased-width portion (23).

7. The tire (1) according to any one of claims 1 to 6, wherein the second chamfered width (W4) is 30% to 60% of the first chamfered width (W3).

8. The tire (1) according to any one of claims 1 to 7, wherein the middle sipes (15) disposed in one of the pair of middle land portions (4A) and the middle sipes (15) disposed in another of the pair of middle land portions (4A) are inclined relative to the tire axial direction in opposite directions.

9. The tire (1) according to any one of claims 1 to 7, wherein the middle sipes (15) disposed in one of the pair of middle land portions (4A) and the middle sipes (15) disposed in another of the pair of middle land portions (4A) are inclined relative to the tire axial direction in a same direction.

10. The tire (1) according to claim 9,
wherein the tread portion (2) comprises an outer tread end (To) located on an outer side of a vehicle when the tire (1) is mounted to the vehicle, by designating a mounting direction to a vehicle,
wherein the five land portions (4) comprise an outer shoulder land portion (11) including the outer tread end (To), and
wherein the outer shoulder land portion (11) comprises a plurality of outer shoulder lateral grooves (41) and a plurality of outer shoulder sipes (42) that are inclined relative to the tire axial direction in a direction opposite to that of the middle sipes (15).

11. The tire (1) according to claim 9 or 10,
wherein the tread portion (2) comprises an inner tread end (Ti) located on an inner side of a vehicle when the tire (1) is mounted to the vehicle, by designating a mounting direction to a vehicle,
wherein the five land portions (4) comprise an inner shoulder land portion (10) including the inner tread end (Ti), and
wherein the inner shoulder land portion (10) comprises a plurality of inner shoulder lateral grooves (35) and a plurality of inner shoulder sipes (36) that are inclined relative to the tire axial direction in a direction opposite to that of the middle sipes (15).

12. The tire (1) according to any one of claims 1 to 11, wherein a maximum depth (d3) of each middle sipe (15) is 50% to 80% of a maximum depth of each shoulder circumferential groove (3A).

13. The tire (1) according to any one of claims 1 to 12, wherein each middle sipe (15) comprises a middle tie bar (25) having a locally raised bottom portion.

14. The tire (1) according to claim 13, wherein a minimum depth (d4) from a ground contact surface of a corresponding one of the middle land portions (4A) to an outer surface of the middle tie bar (25) is 60% to 90% of a maximum depth (d3) of each middle sipe (15).

## Patentansprüche

1. Reifen (1) mit
einem Laufflächenabschnitt (2),
wobei der Laufflächenabschnitt (2) vier Umfangsrillen (3), die sich kontinuierlich in einer Reifenumfangsrichtung zwischen zwei Laufflächenenden (Ti, To) erstrecken, und fünf Stegabschnitte (4) umfasst, die durch die vier Umfangsrillen (3) abgegrenzt sind,
wobei die vier Umfangsrillen (3) ein Paar Schulterumfangsrillen (3A) und ein Paar Scheitelumfangsrillen (3B) umfassen, die zwischen dem Paar Schulterumfangsrillen (3A) angeordnet sind,
wobei die Stegabschnitte (4) ein Paar mittlerer Stegabschnitte (4A) umfassen, die jeweils zwischen einer entsprechenden der Schulterumfangsrillen (3A) und einer entsprechenden der Scheitelumfangsrillen (3B) abgegrenzt sind,
wobei jeder mittlere Stegabschnitt (4A) eine Vielzahl von mittleren Lamellen (15) aufweist, die sich in einer Axialrichtung des Reifens vollständig über den mittleren Stegabschnitt (4A) erstrecken,
wobei jede mittlere Lamelle (15) einen abgeschrägten Abschnitt (20) an jeder von Lamellenkanten auf beiden Seiten aufweist, und
wobei sich der abgeschrägte Abschnitt (20) jeder Lamellenkante jeder mittleren Lamelle (15) in einer Laufflächenebenenansicht von einer entsprechenden der Scheitelumfangsrillen (3B) zu einer entsprechenden der Schulterumfangsrillen (3A) erstreckt, **dadurch gekennzeichnet, dass**
eine erste Abschrägungsbreite (W3) des abgeschrägten Abschnitts (20) jeder Lamellenkante jeder mittleren Lamelle (15) an einem Ende auf der Seite der Scheitelumfangsrille (3B) größer ist als eine zweite Abschrägungsbreite (W4) des abgeschrägten Abschnitts (20) an einem Ende auf der Seite der Schulterumfangsrille (3A).

2. Reifen (1) nach Anspruch 1, wobei der abgeschrägte Abschnitt (20) einen inneren Abschnitt mit vergrößerter Breite (22) umfasst, der eine Abschrägungsbreite aufweist, die sich in Richtung einer entsprechenden der Scheitelumfangsrillen (3B) kontinuierlich vergrößert.

3. Reifen (1) nach Anspruch 2, wobei der abgeschrägte Abschnitt (20) einen äußeren Abschnitt mit vergrößerter Breite (23) umfasst, der eine Abschrägungsbreite aufweist, die sich in Richtung einer entsprechenden der Schulterumfangsrillen (3A) kontinuierlich vergrößert.

4. Reifen (1) nach Anspruch 3,
wobei der abgeschrägte Abschnitt (20) einen Abschnitt mit konstanter Breite (21) aufweist, der sich mit einer konstanten Breite zwischen dem inneren Abschnitt mit vergrößerter Breite (22) und dem äußeren Abschnitt mit vergrößerter Breite (23) erstreckt, und
wobei der Abschnitt mit konstanter Breite (21) in der Axialrichtung des Reifens außen von einer Reifenaxialmittelposition jedes mittleren Stegabschnitts (4A) angeordnet ist.

5. Reifen (1) nach Anspruch 3 oder 4, wobei eine Länge (L3) in der Axialrichtung des Reifens des inneren Abschnitts mit vergrößerter Breite (22) größer ist als eine Länge (L4) in der Axialrichtung des Reifens des äußeren Abschnitts mit vergrößerter Breite (23).

6. Reifen (1) nach einem der Ansprüche 3 bis 5, wobei eine maximale Tiefe (d1) des inneren Abschnitts mit vergrößerter Breite (22) größer ist als eine maximale Tiefe (d2) des äußeren Abschnitts mit vergrößerter Breite (23).

7. Reifen (1) nach einem der Ansprüche 1 bis 6, wobei die zweite Abschrägungsbreite (W4) 30% bis 60% der ersten Abschrägungsbreite (W3) beträgt.

8. Reifen (1) nach einem der Ansprüche 1 bis 7, wobei die mittleren Lamellen (15), die in einem der beiden mittleren Stegabschnitte (4A) angeordnet sind, und die mittleren Lamellen (15), die in einem anderen der beiden mittleren Stegabschnitte (4A) angeordnet sind, in Bezug auf die Axialrichtung des Reifens in entgegengesetzten Richtungen geneigt sind.

9. Reifen (1) nach einem der Ansprüche 1 bis 7, wobei die mittleren Lamellen (15), die in einem der beiden mittleren Stegabschnitte (4A) angeordnet sind, und die mittleren Lamellen (15), die in einem anderen der beiden mittleren Stegabschnitte (4A) angeordnet sind, relativ zur Axialrichtung des Reifens in die gleiche Richtung geneigt sind.

10. Reifen (1) nach Anspruch 9,
wobei der Laufflächenabschnitt (2) ein äußeres Laufflächenende (To) aufweist, das durch Festlegen einer Montagerichtung an einem Fahrzeug auf einer äußeren Seite eines Fahrzeugs angeordnet ist, wenn der Reifen (1) an dem Fahrzeug montiert ist,
wobei die fünf Stegabschnitte (4) einen äußeren Schulterstegabschnitt (11) aufweisen, der das äußere Laufflächenende (To) aufweist, und
wobei der äußere Schulterstegabschnitt (11) eine Vielzahl von äußeren Schulterseitenrillen (41) und eine Vielzahl von äußeren Schulterlamellen (42) aufweist, die relativ zu der Axialrichtung des Reifens in einer Richtung geneigt sind, die derjenigen der mittleren Lamellen (15) entgegengesetzt ist.

11. Reifen (1) nach Anspruch 9 oder 10,
wobei der Laufflächenabschnitt (2) ein inneres Laufflächenende (Ti) aufweist, das durch Festlegen einer Montagerichtung an einem Fahrzeug auf einer inneren Seite eines Fahrzeugs angeordnet ist, wenn der Reifen (1) an dem Fahrzeug montiert ist,
wobei die fünf Stegabschnitte (4) einen inneren Schulterstegabschnitt (10) aufweisen, der das innere Laufflächenende (Ti) aufweist, und
wobei der innere Schulterstegabschnitt (10) eine Vielzahl von inneren Schulterseitenrillen (35) und eine Vielzahl von inneren Schulterlamellen (36) aufweist, die relativ zu der Axialrichtung des Reifens in einer Richtung geneigt sind, die derjenigen der mittleren Lamellen (15) entgegengesetzt ist.

12. Reifen (1) nach einem der Ansprüche 1 bis 11, wobei eine maximale Tiefe (d3) jeder mittleren Lamelle (15) 50% bis 80% einer maximalen Tiefe jeder Schulterumfangsrille (3A) beträgt.

13. Reifen (1) nach einem der Ansprüche 1 bis 12, wobei jede mittlere Lamelle (15) einen mittleren Verbindungssteg (25) mit einem lokal hervorstehenden unteren Abschnitt aufweist.

14. Reifen (1) nach Anspruch 13, wobei eine minimale Tiefe (d4) von einer Bodenkontaktfläche eines entsprechenden der mittleren Stegabschnitte (4A) zu einer äußeren Fläche des mittleren Verbindungsstegs (25) 60% bis 90% einer maximalen Tiefe (d3) jeder mittleren Lamelle (15) beträgt.

## Revendications

1. Pneu (1), comprenant
une partie de bande de roulement (2),
dans lequel la partie de bande de roulement (2) comprend quatre rainures circonférentielles (3) s'étendant de manière continue dans une direction circonférentielle du pneu entre deux extrémités de bande de roulement (Ti, To), et cinq parties de méplat (4) délimitées par les quatre rainures circonférentielles (3),
dans lequel les quatre rainures circonférentielles (3) comprennent une paire de rainures circonférentielles d'épaulement (3A) et une paire de rainures circonférentielles de couronne (3B) disposées entre la paire de rainures circonférentielles d'épaulement (3A),
dans lequel les parties de méplat (4) comprennent une paire de parties de méplat médianes (4A), chacune délimitée entre une rainure correspondante des rainures circonférentielles d'épaulement (3A) et une rainure correspondante des rainures circonférentielles de couronne (3B),
dans lequel chaque partie de méplat médiane (4A) comprend une pluralité de lamelles médianes (15) s'étendant complètement à travers la partie de méplat médiane (4A) dans une direction axiale du pneu,
dans lequel chaque lamelle médiane (15) présente une partie chanfreinée (20) au niveau de chacun de bords de lamelle des deux côtés, et
dans lequel la partie chanfreinée (20) de chaque bord de lamelle de chaque lamelle médiane (15) s'étend depuis une rainure correspondante des rainures circonférentielles de couronne (3B) jusqu'à une rainure correspondante des rainures circonférentielles d'épaulement (3A) dans une vue plane de la bande de roulement, **caractérisé en ce que**
une première largeur chanfreinée (W3) de la partie chanfreinée (20) de chaque bord de lamelle de chaque lamelle médiane (15) au niveau d'une extrémité du côté de la rainure circonférentielle de couronne (3B) est plus importante qu'une seconde largeur chanfreinée (W4) de la partie chanfreinée (20) au niveau d'une extrémité du côté de la rainure circonférentielle d'épaulement (3A).

2. Pneu (1) selon la revendication 1, dans lequel la partie chanfreinée (20) comprend une partie interne de largeur accrue (22) présentant une largeur chanfreinée augmentée de manière continue vers une rainure correspondante des rainures circonférentielles de couronne (3B).

3. Pneu (1) selon la revendication 2, dans lequel la partie chanfreinée (20) comprend une partie externe de largeur accrue (23) présentant une largeur chanfreinée augmentée de manière continue vers une rainure correspondante des rainures circonférentielles d'épaulement (3A).

4. Pneu (1) selon la revendication 3,
dans lequel la partie chanfreinée (20) comprend une partie de largeur constante (21) s'étendant avec une largeur constante entre la partie interne de largeur accrue (22) et la partie externe de largeur accrue (23), et
dans lequel la partie de largeur constante (21) est disposée vers l'extérieur d'une position centrale axialement du pneu de chaque partie de méplat médiane (4A), dans la direction axiale du pneu.

5. Pneu (1) selon la revendication 3 ou 4, dans lequel une longueur (L3), dans la direction axiale du pneu, de la partie interne de largeur accrue (22) est plus importante qu'une longueur (L4), dans la direction axiale du pneu, de la partie externe de largeur accrue (23).

6. Pneu (1) selon l'une quelconque des revendications 3 à 5, dans lequel une profondeur maximale (d1) de la partie interne de largeur accrue (22) est plus importante qu'une profondeur maximale (d2) de la partie externe de largeur accrue (23).

7. Pneu (1) selon l'une quelconque des revendications 1 à 6, dans lequel la seconde largeur chanfreinée (W4) est 30 % à 60 % de la première largeur chanfreinée (W3).

8. Pneu (1) selon l'une quelconque des revendications 1 à 7, dans lequel les lamelles médianes (15) disposées dans l'une de la paire de parties de méplat médianes (4A) et les lamelles médianes (15) disposées dans une autre de la paire de parties de méplat médianes (4A) sont inclinées par rapport à la direction axiale du pneu dans des directions opposées.

9. Pneu (1) selon l'une quelconque des revendications 1 à 7, dans lequel les lamelles médianes (15) disposées dans l'une de la paire de parties de méplat médianes (4A) et les lamelles médianes (15) disposées dans une autre de la paire de parties de méplat médianes (4A) sont inclinées par rapport à la direction axiale du pneu dans une même direction.

10. Pneu (1) selon la revendication 9,
dans lequel la partie de bande de roulement (2) comprend une extrémité de bande de roulement externe (To) située sur un côté externe d'un véhicule lorsque le pneu (1) est monté sur le véhicule, en désignant une direction de montage sur un véhicule,
dans lequel les cinq parties de méplat (4) comprennent une partie de méplat d'épaulement externe (11) comprenant l'extrémité de bande de roulement externe (To), et
dans lequel la partie de méplat d'épaulement externe (11) comprend une pluralité de rainures latérales d'épaulement externes (41) et une pluralité de lamelles d'épaulement externes (42) qui sont inclinées par rapport à la direction axiale du pneu dans une direction opposée à celle des lamelles médianes (15).

11. Pneu (1) selon la revendication 9 ou 10,
dans lequel la partie de bande de roulement (2) comprend une extrémité de bande de roulement interne (Ti) située sur un côté interne d'un véhicule lorsque le pneu (1) est monté sur le véhicule, en désignant une direction de montage sur un véhicule,
dans lequel les cinq parties de méplat (4) comprennent une partie de méplat d'épaulement interne (10) comprenant l'extrémité de bande de roulement interne (Ti), et
dans lequel la partie de méplat d'épaulement interne (10) comprend une pluralité de rainures latérales d'épaulement internes (35) et une pluralité de lamelles d'épaulement internes (36) qui sont inclinées par rapport à la direction axiale du pneu dans une direction opposée à celle des lamelles médianes (15).

12. Pneu (1) selon l'une quelconque des revendications 1 à 11, dans lequel une profondeur maximale (d3) de chaque lamelle médiane (15) est 50 % à 80 % d'une profondeur maximale de chaque rainure circonférentielle d'épaulement (3A).

13. Pneu (1) selon l'une quelconque des revendications 1 à 12, dans lequel chaque lamelle médiane (15) comprend un pont de gomme médian (25) présentant une partie inférieure localement surélevée.

14. Pneu (1) selon la revendication 13, dans lequel une profondeur minimale (d4) depuis une surface de contact avec le sol d'une partie correspondante des parties de méplat médianes (4A) jusqu'à une surface externe du pont de gomme médian (25) est 60 % à 90 % d'une profondeur maximale (d3) de chaque lamelle médiane (15).
